# FASCICULE DE BREVET EUROPEEN

(11) **EP 2 086 359 B1**
(45) Date de publication et mention de la délivrance du brevet: **27.08.2014**
(21) Numéro de dépôt: 07858410.9
(22) Date de dépôt: 09.10.2007
(51) Int. Cl.: A23L 3/375

(54) **PROCEDE D'OBTENTION D'UN PRODUIT SUBISSANT CONSECUTIVEMENT UN GAZEIFICATION ET UNE SURGELATION CRYOGENIQUE**
VERFAHREN ZUR HERSTELLUNG EINES PRODUKTS, DAS NACHEINANDER EINEM VERGASUNGSSCHRITT UND EINEM KRYOGENEN TIEFGEFRIERUNGSSCHRITT UNTERWORFEN WURDE
METHOD FOR OBTAINING A PRODUCT SEQUENTIALLY SUBMITTED TO GASIFICATION AND CRYOGENIC DEEP-FREEZING

(30) Priorité: 09.10.2006 FR 0608820
(43) Date de publication de la demande: 12.08.2009
(73) Titulaire: GENIALIS, 18250 Henrichemont (FR)
(72) Inventeur: Desjardin-Lavisse, Isabelle, 18250 Henrichemont (FR); Desobry, Stéphane, 54740 Saint Remimont (FR); Uhrig, Eric, 57840 Ottange (FR); Probst, Laurent, 54410 Tomblaine (FR)
(74) Mandataire: Office Freylinger
(86) Numéro de dépôt international: PCT/FR2007/001641
(87) Numéro de publication internationale: WO 2008/043909

(56) Documents cités:
- EP-A- 0 011 332
- EP-A1- 0 659 351
- WO-A-94/28736
- WO-A-2005/034643
- DE-A1- 19 750 677
- ES-A1- 2 194 558
- JP-A- 4 203 869
- JP-A- 10 271 954
- US-A- 4 393 660
- US-B1- 6 349 549

## Description

La présente invention concerne un procédé d'obtention d'un produit, subissant consécutivement une gazéification et une surgélation cryogénique.

Plus précisément, l'invention concerne un procédé global associant deux opérations unitaires consécutives de gazéification et de surgélation cryogénique de matrices ou produits, alimentaires ou non, initialement sous forme liquide, semi-liquide ou pâteuse. Ce procédé permet de produire des particules, telles que des billes ou des granules, utilisables ou consommables après remise à température positive.

L'incorporation de gaz sous pression supérieure à 2 bar dans un liquide ou une pâte permet d'obtenir la sotubitisation de quantités importantes de gaz qui seront ensuite piégées dans la matrice lors de la surgélation.

Cette incorporation de gaz peut être réalisée à l'aide d'azote, de protoxyde d'azote, de dioxyde de carbone, d'un gaz rare comme l'argon ou un mélange de ces gaz.

Divers dispositifs ont déjà été décrits pour ajouter du gaz dans une matrice, alimentaire ou non.

Ainsi, le brevet EP 1 594 599 décrit un dispositif permettant de créer des mini-bulles dans un liquide. Ce dispositif comprend un espace de mélange gaz-liquide communiquant avec un moyen d'arrivée de gaz et un disque, et des moyens mettant en contact l'une des faces du disque avec le mélange gaz-liquide.

Le brevet EP 1 486 129 décrit un dispositif destiné à obtenir un liquide spumescent, à l'aide d'oxygène gazeux. Ce dispositif fonctionne sous pression et permet de générer aseptiquement et de stabiliser les bulles dans le liquide.

La surgélation est un procédé connu pour conserver des produits alimentaires ou non sur de très longues durées, sans qu'ils subissent d'altérations majeures.

Ainsi, le brevet GB 1 304 045 décrit un dispositif de congélation lente de gouttes non miscibles contenues dans un liquide ayant un gradient de température allant de l'ambiante jusqu'en dessous du point de congélation du liquide.

Le brevet EP 201 698 décrit un dispositif destiné à condenser les arômes du café au moyen d'un liquide cryogène. Le brevet ES 2194558 décrit un procédé de surgélation de jus de fruits pour produire des billes congelées sans gazéification.

Le brevet US 6 349 549 décrit un procédé général de surgélation cryogénique de billes de dessert glacé non gazéifié.

Le brevet JP 0420203869 décrit un procédé de production de particules suite à une gazéification sous haute pression, c'est-à-dire supérieure à 1000 bar, d'un produit congelé.

Le DE 197 50 677 concerne un procédé de fabrication d'un produit alimentaire déshydraté. Le procédé concerne en particulier l'élaboration de produits congelés tels que glace, chantilly, concentrés de lait ou de protéines de lait ou encore mousse de fruits à structure très aérée. Un mélange de base est élaboré, lequel est battu pour le faire mousser sous une pression statique de 1 à 3 bars. Puis ce mélange aéré est pulvérisé à travers une buse -au moyen d'un gaz de pulvérisation- dans une chambre de pulvérisation à la pression atmosphérique, cette chambre comprenant également des moyens de refroidissement.

Le EP-A-0 011 332 et le WO 94/28736 décrivent des procédés de réalisation de thé lyophilisé.

Les documents JP 03059372, GB1095004, JP60054664, JP06343398 et US2975603 concernent la production de neige carbonique, en particulier pour la fabrication de boissons carbonatées.

L'invention propose un procédé permettant à la fois de gazéifier une matrice plus ou moins liquide, en y intégrant du gaz dissous par injection de gaz sous pression supérieure à 2 bar, puis de surgeler cette matrice.

A cet effet, la présente invention a pour objet un procédé d'obtention d'un produit sous forme de granules, particules ou billes surgelées riches en gaz dissous, à partir d'une matrice liquide, semi-liquide ou pâteuse, selon la revendication 1.

Le procédé selon l'invention ne consiste pas en un foisonnement mais en une simple mise à l'équilibre d'une matrice alimentaire avec du gaz sous pression puis de la surgélation cryogénique de la matrice gazéifiée pour former des particules surgelées, telles que des sphères ou autres formes.

Les pressions utilisées pour ce procédé sont comprises entre 2 et 10 bar et aucune libération de gaz n'est ciblée lors de la surgélation. Les billes ou particules obtenues sont denses afin que la libération de gaz se fasse au moment de la remise à température et non pas dans l'installation lors de la surgélation.

Le procédé réalise en série la gazéification d'une matrice, et sa surgélation rapide afin de produire des particules, des granules ou des billes contenant du gaz dissous.

Ces particules, granules ou billes sont stables durant la conservation à l'état congelé et permettent la production de mousses ou de bulles lors de la remise en température positive du produit final (température supérieure à 1 °C).

La remise en température peut se faire par décongélation lente à température positive ou très rapidement par chauffage ou cuisson (four micro-ondes, four traditionnel ou autre moyen de chauffage approprié).

La première étape du procédé consiste à gazéifier la matrice choisie. Cette étape est réalisée par injection ou balayage, de gaz, en particulier l'azote, le protoxyde d'azote, l'argon, le dioxyde de carbone ou autre gaz adapté. Le procédé permet une forte dissolution du gaz dans la matrice liquide, semi-liquide ou pâteuse.

La deuxième étape du procédé concerne la surgélation instantanée de la matrice gazéifiée, au moyen d'azote liquide ou de dioxyde de carbone liquide, ou tout autre fluide cryogène adapté.

Elle est réalisée à une pression supérieure à 2 bar, de manière à assurer une bonne rétention du gaz dissous.

Cette surgélation peut être réalisée individuellement, en masse, broyée par la suite, ou sous forme de granules surgelées, permettant la production de gouttes ou de gouttelettes ensuite surgelées.

Les éléments ainsi obtenus peuvent avoir une gamme de taille variée, qui va permettre d'obtenir par la suite des bulles, des mousses ou des produits multiphasiques.

Les particules, granules et billes obtenues peuvent avoir un diamètre moyen allant de 1 mm à 2 cm.

La troisième étape est la récupération des granules ou autres formes par un moyen mécanique et/ou automatique.

La dernière étape du procédé concerne son conditionnement sous forme de granules, billes ou autre forme dans un emballage, puis son stockage à une température variant de -18 à -30°C.

Le produit ainsi gazéifié et surgelé est ensuite décongelé par tout mode de réchauffage approprié, pouvant aller d'une remise à température positive à un chauffage proche de l'ébullition. Le produit ainsi obtenu se présente sous forme gazéifiée ou avec une mousse en surface selon la taille des billes, granules et autres particules formées lors de la gazéification.

Le procédé selon l'invention préserve l'intégrité de l'aliment ou de la boisson de départ, notamment au niveau de ses propriétés organoleptiques et physico-chimiques, durant son stockage au froid.

Ce procédé permet également d'obtenir des aliments multiphasiques lors de la remise en température. Ces phases peuvent consister en des couches superposées de composition et/ou de texture différentes selon le type de produit subissant le procédé.

Le procédé selon l'invention peut être appliqué aux produits alimentaires, notamment les boissons. Il permet en effet au consommateur de se préparer un café expresso mousseux, ou un chocolat au lait crémeux sans posséder un équipement complexe.

Il permet également la préparation de boissons aromatisées fraîches, telles que du jus de fruit gazéifié ou du sirop gazéifié, sans ajout d'eau gazeuse ou de soda, avec ou sans séparation de phase entre constituants., de boissons fraîches aromatisées par ajout d'eau plate à des billes de sirop gazéifiées permettant en outre de rafraîchir l'eau lors de leur fonte.

Après gazéification et surgélation du produit sous forme de pâte ou de liquide, le procédé selon l'invention permet d'obtenir par exemple un café expresso mousseux par simple remise en température, par réchauffage au four à micro-ondes ou autre procédé adapté.

On peut envisager les autres applications suivantes du procédé permettant de gazéifier et surgeler des aliments plus ou moins liquides : cafés aromatisés ou non, cappuccino, chocolat viennois, thé au lait, boissons plates ou pétillantes à base de sirops, boissons plates ou pétillantes à base de fruits ou légumes frais pressés, cocktails alcoolisés ou non. Dans ce dernier cas, la remise en température peut donner des bi- ou tri-phases en fonction de la densité et de la miscibilité des éléments gazéifiés.

Le procédé peut également s'appliquer à des aliments liquides épais, tels que des soupes, des sauces, des crèmes desserts, des compotes de fruits, ou des coulis de fruits ou de légumes frais.

Des aliments pâteux peuvent également être gazéifiés et surgelés. Ils peuvent être des appareils à gâteaux, des appareils salés pour tartes, quiches ou gratins, des appareils à fondant, des appareils pour verrines.

Le procédé selon l'invention peut également être utilisé pour des produits non alimentaires.

L'invention a pour but et avantages d'obtenir des préparations alimentaires totalement prêtes à l'emploi, à l'exclusion de tout traitement ou manipulation par un utilisateur, sans production de déchets d'aucune sorte.

Les préparations sont disponibles par simple remise en température ambiante ou réchauffage par tout moyen connu.

Les préparations citées sont totalement naturelles, dépourvues d'additifs ou de substances résiduelles après décongélation, les gaz dissous s'échappant de la structure de la matrice pour former une mousse ou des micro-bulles.

Enfin, les préparations en question sont absolument, tant au plan physique qu'organoleptique, fidèles au produit référent qui nécessite un process complexe de mise en oeuvre :

A titre d'exemple, on peut obtenir un café de qualité optimale, du type expresso, dans des endroits sans point d'eau et sans ressources mécaniques (machines à pression).

Bien que l'invention ait été décrite avec des moyens de réalisation particuliers, elle comprend tous les équivalents techniques des moyens décrits.

## Revendications

1. Procédé d'obtention d'un produit sous forme de granules, particules ou billes surgelées denses, riches en gaz dissous, à partir d'une matrice liquide, semi-liquide ou pâteuse, constitué de deux étapes consécutives :
- une étape de gazéification de la matrice par injection de gaz sous une pression comprise entre 2 et 10 bar, afin de dissoudre le gaz dans la matrice, cette étape de gazéification étant réalisée avec de l'azote, du protoxyde d'azote ou d'un gaz rare comme l'argon,
- une phase de surgélation rapide de la matrice contenant le gaz dissous par fluide cryogène à une pression supérieure à 2 bar.

2. Procédé d'obtention d'un produit selon la revendication 1, **caractérisé en ce que** l'étape de gazéification consiste en une mise à l'équilibre de la matrice avec ledit gaz sous pression.

3. Procédé d'obtention d'un produit selon la revendication 1 ou 2, **caractérisé en ce que** l'étape de surgélation est réalisée au moyen d'azote liquide.

4. Procédé d'obtention d'un produit selon l'une des revendications 1, 2 ou 3, **caractérisé en ce que** les particules, granules ou billes formant ledit produit sont obtenues par surgélation individuelle ou par surgélation en masse puis broyage.

5. Procédé d'obtention d'un produit selon l'une quelconque des revendications précédentes, **caractérisé en ce que** les granules, billes, ou particules formant ledit produit présentent un diamètre variant de 1 mm à 2 cm.

6. Procédé d'obtention d'un produit selon l'une quelconque des revendications précédentes, **caractérisé en ce que** les granules, particules ou billes formant ledit produit constituent une boisson chaude mousseuse.

7. Procédé d'obtention d'un produit selon l'une quelconque des revendications 1 à 5 , **caractérisé en ce que** les granules, particules ou billes formant ledit produit constituent une boisson fraîche gazéifiée avec ou sans séparation de phase entre constituants.

8. Procédé d'obtention d'un produit selon l'une quelconque des revendications 1 à 5 , **caractérisé en ce que** les granules, particules ou billes formant ledit produit constituent une sauce ou un dessert.

9. Produit alimentaire susceptible d'être obtenu selon le procédé de l'une des revendications 1 à 4, ledit produit alimentaire se présentant sous forme de granules, particules ou billes surgelées denses, riches en gaz dissous et ayant un diamètre variant de 1 mm à 2 cm, le gaz dissous étant choisi parmi l'azote, le protoxyde d'azote, un gaz rare comme l'argon, ou un mélange de ces gaz.

10. Produit alimentaire selon la revendication 9, dans lequel les granules, particules ou billes surgelées sont obtenues à partir d'une matrice telle qu'une boisson, un aliment liquide épais, un aliment pâteux.

11. Produit alimentaire selon la revendication 10, dans lequel la matrice est une boisson choisie parmi le groupe comprenant : cafés aromatisés ou non, cappuccino, chocolat viennois, thé au lait, boissons plates ou pétillantes à base de sirops, boissons plates ou pétillantes à base de fruits ou légumes frais pressés, cocktails alcoolisés ou non.

12. Produit alimentaire selon la revendication 10, dans lequel la matrice est un aliment liquide épais choisi parmi le groupe comprenant : les soupes, les sauces, les crèmes desserts, les compotes de fruits, des coulis de fruits et coulis de légumes frais.

13. Produit alimentaire selon la revendication 10, dans lequel la matrice est un aliment pâteux choisi parmi le groupe comprenant les appareils à gâteaux, les appareils salés pour tartes, quiches ou gratins, les appareils à fondant, et les appareils pour verrines.

14. Produit alimentaire selon l'une quelconque des revendications 9 à 13, présentant une mousse, des bulles ou des structures multiphasiques lors de son réchauffement ou de sa remise à température positive.

## Patentansprüche

1. Verfahren zum Herstellen eines Erzeugnisses in Form von kompakten, tiefgefrorenen Körnern, Partikeln oder Kugeln, die reich an gelöstem Gas sind, aus einer flüssigen, halbflüssigen oder pastösen Grundmasse, bestehend aus zwei aufeinander folgenden Schritten:
- einem Gasungsschritt der Grundmasse durch Einspritzen eines Gases unter einem Druck zwischen 2 und 10 bar, um das Gas in der Grundmasse zu lösen, wobei der Gasungsschritt mit Stickstoff, Distickstoffoxid oder einem Edelgas wie Argon durchgeführt wird,
- einem Schritt des schnellen Tiefgefrierens der das gelöste Gas enthaltenden Grundmasse durch kryogenes Fluid unter einem Druck von mehr als 2 bar.

2. Verfahren zum Herstellen eines Erzeugnisses nach Anspruch 1, **dadurch gekennzeichnet, dass** der Gasungsschritt in einem Ingleichgewichtbringen der Grundmasse mit dem unter Druck befindlichen Gas besteht.

3. Verfahren zum Herstellen eines Erzeugnisses nach Anspruch 1 oder 2, **dadurch gekennzeichnet, dass** der Schritt des Tiefgefrierens mit Hilfe von flüssigem Stickstoff durchgeführt wird.

4. Verfahren zum Herstellen eines Erzeugnisses nach einem der Ansprüche 1, 2 oder 3, **dadurch gekennzeichnet, dass** die Körner, Partikel oder Kugeln, die das Erzeugnis bilden, durch einzelnes Tiefgefrieren oder durch massenweises Tiefgefrieren und anschließend durch Zerkleinern hergestellt werden.

5. Verfahren zum Herstellen eines Erzeugnisses nach einem der vorhergehenden Ansprüche, **dadurch gekennzeichnet, dass** die Körner, Partikel oder Kugeln, die das Erzeugnis bilden, einen Durchmesser aufweisen, der von 1 mm bis 2 cm variiert.

6. Verfahren zum Herstellen eines Erzeugnisses nach einem der vorhergehenden Ansprüche, **dadurch gekennzeichnet, dass** die Körner, Partikel oder Kugeln, die das Erzeugnis bilden, ein geschäumtes Heißgetränk bilden.

7. Verfahren zum Herstellen eines Erzeugnisses nach einem der Ansprüche 1 bis 5, **dadurch gekennzeichnet, dass** die Körner, Partikel oder Kugeln, die das Erzeugnis bilden, ein Sprudelerfrischungsgetränk bilden, mit oder ohne Phasenabscheidung zwischen den Bestandteilen.

8. Verfahren zum Herstellen eines Erzeugnisses nach einem der Ansprüche 1 bis 5, **dadurch gekennzeichnet, dass** die Körner, Partikel oder Kugeln, die das Erzeugnis bilden, eine Soße oder ein Dessert bilden.

9. Lebensmittelerzeugnis, das nach dem Verfahren nach einem der Ansprüche 1 bis 4 herstellbar ist, wobei das Lebensmittelerzeugnis die Form von kompakten, tiefgefrorenen Körnern, Partikeln oder Kugeln aufweist, die reich an gelöstem Gas sind und einen Durchmesser haben, der von 1 mm bis 2 cm variiert, wobei das gelöste Gas gewählt ist aus Stickstoff, Distickstoffoxid, einem Edelgas wie Argon oder einem Gemisch dieser Gase.

10. Lebensmittelerzeugnis nach Anspruch 9, wobei die Körner, Partikel oder Kugeln aus einer Grundmasse hergestellt sind wie ein Getränk, ein dickflüssiges Lebensmittel, ein pastöses Lebensmittel.

11. Lebensmittelerzeugnis nach Anspruch 10, wobei die Grundmasse ein Getränk ist, das gewählt ist aus der Gruppe umfassend: aromatisierte oder unaromatisierte Kaffees, Cappuccino, Trinkschokolade, Milch, Getränke mit oder ohne Sprudel auf der Basis von Sirups, Getränke mit oder ohne Sprudel auf der Basis von gepresstem Frischobst oder Frischgemüse, alkoholhaltige oder alkoholfreie Cocktails.

12. Lebensmittelerzeugnis nach Anspruch 10, wobei die Grundmasse ein dickflüssiges Getränk ist, das gewählt ist aus der Gruppe umfassend: Suppen, Soßen, Dessertcremes, Obstkompotte, passiertes Frischobst und passiertes Frischgemüse.

13. Lebensmittelerzeugnis nach Anspruch 10, wobei die Grundmasse ein pastöses Lebensmittel ist, das gewählt ist aus der Gruppe umfassend: Rührmassen für Kuchen, salzige Rührmassen für Tarte, Quiche oder Gratin, Rührmassen für Kuchen mit flüssigem Kern und Rührmassen für Gläser.

14. Lebensmittelerzeugnis nach einem der Ansprüche 9 bis 13, das einen Schaum, Blasen oder Multiphasenstrukturen aufweist, wenn es erhitzt oder auf eine positive Temperatur gebracht wird.

## Claims

1. A method for obtaining a product in a form of deep-frozen granules, particles or beads, which are compact and have an elevated content of dissolved gas, starting from a liquid, semi-liquid or pasty matrix, said method comprising two consecutive steps:
- a gasification step of the matrix by injecting gas under a pressure between 2 bar and 10 bar in order to dissolve gas in the matrix, said gasification step being carried out with nitrogen, nitrous oxide or a noble gas such as argon,
- a rapid deep-freezing step of the matrix containing the dissolved gas by cryogenic fluid at a pressure of above 2 bar.

2. A method for obtaining a product according to claim 1, **characterised in that** the gasification step consists in establishing an equilibrium between the matrix and said pressurised gas.

3. A method for obtaining a product according to claim 1 or claim 2, **characterised in that** the deep-freezing step is carried out with liquid nitrogen.

4. A method for obtaining a product according to one of claims 1, 2 or 3, **characterised in that** the particles, granules or beads forming said product are obtained by individual deep-freezing or by bulk deep-freezing followed by grinding.

5. A method for obtaining a product according to any one of the preceding claims, **characterised in that** the granules, beads or particles forming said product have a diameter which varies from 1 mm to 2 cm.

6. A method for obtaining a product according to any one of the preceding claims, **characterised in that** the granules, particles or beads forming said product constitute a foamy hot beverage.

7. A method for obtaining a product according to any one of claims 1 to 5, **characterised in that** the granules, particles or beads forming said product constitute a gasified cold beverage with or without phase separation between the constituents.

8. A method for obtaining a product according to any one of claims 1 to 5, **characterised in that** the granules, particles or beads forming said product constitute a sauce or a dessert.

9. A food product obtainable according to the method of one of claims 1 to 4, said food product taking the form of deep-frozen granules, particles or beads, which are compact, have an elevated content of dissolved gas and have a diameter varying from 1 mm to 2 cm, the dissolved gas being selected from nitrogen, nitrous oxide, a noble gas such as argon or a mixture of said gases.

10. A food product according to claim 9, in which the deep-frozen granules, particles or beads are obtained from a matrix such as a beverage, a thick liquid foodstuff or a pasty foodstuff.

11. A food product according to claim 10, in which the matrix is a beverage selected from the group comprising: flavoured or unflavoured coffees, cappuccino, hot chocolate, tea with milk, still or sparkling beverages based on syrups, still or sparkling beverages based on freshly squeezed fruit or vegetables or alcoholic or non-alcoholic cocktails.

12. A food product according to claim 10, in which the matrix is a thick liquid foodstuff selected from the group comprising: soups, sauces, custard desserts, stewed fruit, fruit purees and fresh vegetable purees.

13. A food product according to claim 10, in which the matrix is a pasty foodstuff selected from the group comprising: cake mixtures, tart, quiche or gratin mixtures, fondant dessert mixtures, and shot glass canapé mixtures.

14. A food product according to any one of claims 9 to 13 which, when heated or returned to an above-zero temperature, has a foam, bubbles or multiphase structures.
